(19) Europäisches Patentamt / European Patent Office / Office européen des brevets

(11) **EP 2 849 302 B1**

(12) **EUROPEAN PATENT SPECIFICATION**

(45) Date of publication and mention
of the grant of the patent:
**28.11.2018 Bulletin 2018/48**

(51) Int Cl.:
*H02J 3/00* (2006.01)     *H02J 3/46* (2006.01)

(21) Application number: **13788649.5**

(86) International application number:
**PCT/JP2013/063225**

(22) Date of filing: **02.05.2013**

(87) International publication number:
**WO 2013/168814 (14.11.2013 Gazette 2013/46)**

(54) **ENERGY MANAGEMENT DEVICE, ENERGY MANAGEMENT METHOD AND PROGRAM**

ENERGIEVERWALTUNGSVORRICHTUNG, ENERGIEVERWALTUNGSVERFAHREN UND PROGRAMM

DISPOSITIF DE GESTION DE L'ÉNERGIE, PROCÉDÉ DE GESTION DE L'ÉNERGIE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2012 JP 2012108152**

(43) Date of publication of application:
**18.03.2015 Bulletin 2015/12**

(73) Proprietor: **Sony Corporation
Tokyo 108-0075 (JP)**

(72) Inventors:
• **SAKO, Yoichiro
Tokyo 108-0075 (JP)**
• **SERITA, Kazutoshi
Tokyo 108-0075 (JP)**
• **INOKUCHI, Tatsuya
Tokyo 108-0075 (JP)**
• **WU, Jiang
Tokyo 108-0075 (JP)**

(74) Representative: **Witte, Weller & Partner
Patentanwälte mbB
Postfach 10 54 62
70047 Stuttgart (DE)**

(56) References cited:
WO-A1-2011/102374     WO-A1-2012/057119
WO-A2-2005/040992     JP-A- 2012 005 168
JP-A- 2012 019 579     JP-A- 2012 055 067

**Description**

TECHNICAL FIELD

The present disclosure relates to an energy management device, an energy management method, and a program, which can effectively sell electric power by using, for example, a photovoltaic power generation system.

BACKGROUND ART

Power consumption by households and the like is steadily increasing, so that it is desired to efficiently control the balance between supply and demand of power. System power supply may be limited due to limitation of the amount of power supply and power consumption is required to be more controlled because of restrictionof power contract When a power failure occurs, if a power source such as a private electric generator or a battery is provided, the power failure can be temporarily avoided. However, the amount of power supply of a power source of a private electric generator and a battery is smaller than that of commercial power, so that it is known that the power from the power source is supplied according to a predetermined priority order. For example, methods as described in Patent Document 1 to Patent Document 3 described below are proposed.

Patent Document 1 describes that when commercial power fails, the length of time of the power failure is considered to select electric apparatuses to which power is supplied from a private electric generator. For example, if the length of time of the power failure is short, a refrigerator-freezer is left in a stopped state. On the other hand, if the length of time of the power failure is long, the refrigerator-freezer is alternately stopped and operated normally.

Patent Document 2 describes that electric apparatuses are divided into four priority groups in advance, and when power is supplied from a battery to the electric apparatuses during power failure, the power supply is limited in order from the low priority group by considering the remaining capacity of the battery.

Patent Document 3 describes that optimal power control is performed based on user's life style in a system using a power generation system and a power storage system.

Patent Document 4 discloses a technique for switching a photovoltaic power generation facility linked to a system between electric power selling to the system and power storage (charging a battery) as energy.

On the other hand, a photovoltaic power generation system is installed in homes and the like and a power purchase system in which an electric power company purchases generated power is widely used. The purchase system includes a full amount purchase system that purchases the total amount of electric power generated by the photovoltaic power generation and a purchase system that purchases remaining electric power (referred to as surplus power) which is obtained by subtracting consumed electric power from the generated amount of electric power. The surplus power purchase system is the current system.

CITATION LIST

PATENT DOCUMENT

Patent Document 1: JP 2003-092844 A
Patent Document 2: JP 2004-328960 A
Patent Document 3: JP 2012-005168 A
Patent Document 4: JP 2011-172334 A

WO 2012/057119 A1 discloses an electricity supply system that efficiently utilizes electricity. The system includes a power generation unit for supplying electricity, a load unit for consuming at least one of the electricity supplied from the power generation unit and system electricity supplied from an electricity system, and a control unit for controlling operations of the power generation unit and the load unit. The power generation unit supplies electricity to the electricity system, and the control unit controls the power generation unit and the load unit on the basis of values of a plurality of types of electricity handled by the electricity supply system.

WO 2005/040992 A2 discloses an intelligent power management system that includes a circuit breaker containing a PLC module that spans open contacts of the circuit breaker to provide a communication path for PLC messages between the line and load sides of the circuit when the contacts are open. The contacts are motorized to permit remote operation through PLC messaging. Coupled to the PLC module is a controller, which controls the opening and closing of the motorized contacts under user control or via an adaptive load management algorithm that reduces peak power consumption and adapts a set of loads to changed power supply conditions. The controller can also dynamically alter operational current and fault threshold levels on a real-time basis based upon circuit requirements or environmental conditions. The algorithm runs a state machine and also manages loads in a limited power source environment such as when loads are powered by a generator.

## SUMMARY OF THE INVENTION

### PROBLEMS TO BE SOLVED BY THE INVENTION

In Patent Document 1 and Patent Document 2 described above, the priority order is predetermined in units of electric apparatuses and the power supply is limited in order from the low priority electric apparatuses when a power failure or the like occurs and the power is limited. Therefore, in Patent Document 1 and Patent Document 2, there is no description of controlling the electric power selling and power saving of electric apparatuses in association with each other. In the same manner, in Patent Document 3 and Patent Document 4, there is no description of controlling the electric power selling and power saving of electric apparatuses in association with each other.

Under the current surplus power purchase system, reducing the amount of power consumption leads to increasing the amount of sold electric power. In the conventional techniques, the power consumption of electric apparatuses is controlled from a viewpoint of power failure countermeasure and power saving. However, it is not considered to control the power consumption of electric apparatuses from a viewpoint of electric power selling. When setting a target of the amount of sold electric power and intending to achieve the target value of the amount of sold electric power, it is possible to further increase motivation to save power.

Therefore, an object of the present disclosure is to provide an energy management device, an energy management method, and a program, which can clearly indicate a purpose of power saving because the power saving is performed so that the amount of sold electric power reaches the target value.

### SOLUTIONS TO PROBLEMS

To solve the above problem, the present disclosure provides an energy management device according to claim 1.

The present disclosure further provides an energy management method according to claim 8.

The present disclosure further provides a program for causing a computer to perform an energy management method according to claim 8.

### EFFECTS OF THE INVENTION

According to the present disclosure, the power consumption is controlled so that the amount of sold electric power reaches the target value. Therefore, power saving is actively performed.

### BRIEF DESCRIPTION OF DRAWINGS

Fig. 1 is a block diagram of a first embodiment of the present disclosure.
Fig. 2 is a schematic drawing used to explain control of the first embodiment of the present disclosure.
Fig. 3 is a flowchart used to explain control of the first embodiment of the present disclosure.
Fig. 4 is a flowchart used to explain control of a second embodiment of the present disclosure.
Fig. 5 is a flowchart used to explain control of a third embodiment of the present disclosure.

### MODE FOR CARRYING OUT THE INVENTION

Embodiments described below are preferred specific examples of the present disclosure and are attached with various technically preferable limitations. However, the scope of the present disclosure is not limited to these embodiments unless there is a specific statement that limits the present disclosure in the description below.

The order of the description below is as follows:

<1. First Embodiment>
<2. Second Embodiment>
<3. Third Embodiment>
<4. Modified Example>

<1. First Embodiment>

"System Configuration"

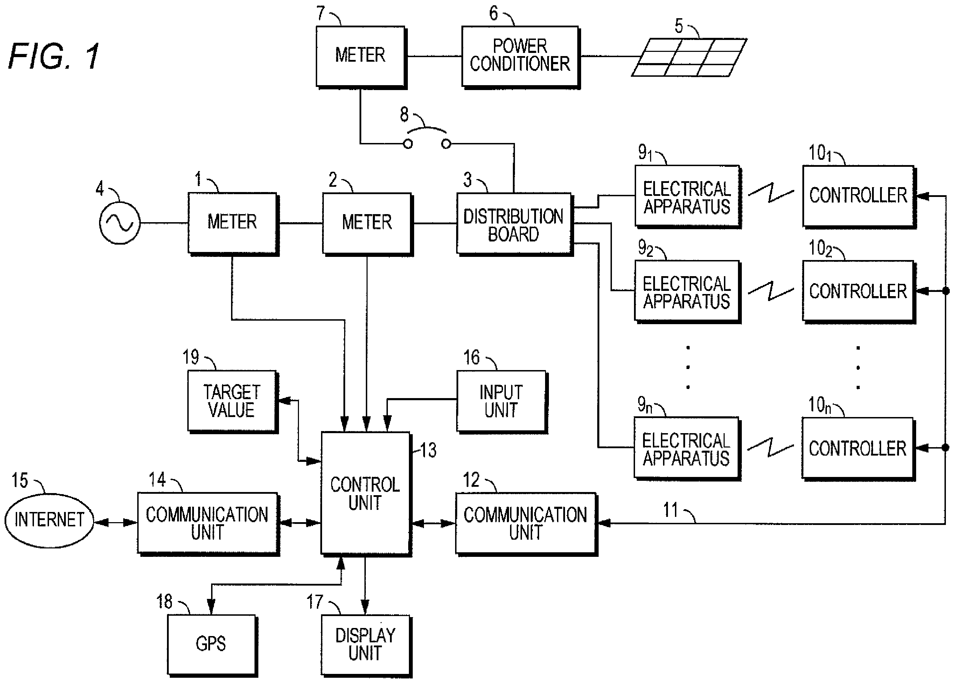

An example of an electric power system to which the present disclosure can be applied, for example, an electric power system in a home, will be described with reference to Fig. 1. An electric power line is introduced into a building from an outdoor distribution line through a lead-in wire and the electric power line is connected to a normal-power-flow watt-hour meter 1 (simply represented as a meter in Fig. 1) . In Fig. 1, a system power source is indicated by a reference numeral 4 of an AC power source. The normal-power-flow watt-hour meter 1 measures the amount of purchased electric power. For example, the normal-power-flow watt-hour meter 1 determines a value obtained by dividing integral power consumption (kWh) obtained by integrating instantaneous power for 30 minutes by 30 minutes to be the demand power (kW).

A reverse-power-flow watt-hour meter 2 (simply represented as a meter in Fig. 1) is connected to the normal-power-flow watt-hour meter 1. The reverse-power-flow watt-hour meter 2 measures the amount of sold electric power. A distribution board 3 is connected to the output side of the reverse-power-flow watt-hour meter 2. The reverse-power-flow watt-hour meter 2 measures the amount of electric power in the same manner as the normal-power-flow watt-hour meter 1.

A power generated by a photovoltaic cell 5 is supplied to a power conditioner 6. The power conditioner 6 converts an unstable DC output voltage of the photovoltaic cell 5 into a stable DC voltage and further converts the DC voltage into an AC voltage. The power conditioner 6 performs control to track a maximum power point at all times (Maximum Power Point Tracking (MPPT)) by tracking variation of the power generated by the photovoltaic cell. An output of the power conditioner 6 is supplied to the distribution board 3 through a total power generation watt-hour meter 7 (simply represented as a meter in Fig. 1) and a photovoltaic circuit breaker 8. The total power generation watt-hour meter 7 measures the amount of electric power generated by a photovoltaic power generation system. The total power generation watt-hour meter 7 measures the amount of electric power in the same manner as the normal-power-flow watt-hour meter 1.

In the photovoltaic power generation system, the relationship between the amount of total power generation and the amount of self-consumed power is as follows:

$$[\text{the amount of self-consumed power}] = [\text{the amount of total power generation}] - [\text{the amount of reverse-flow power}]$$

The electric power to be sold is the amount of reverse-flow power. Therefore, the following equation is established:

$$[\text{the amount of reverse-flow power}] = [\text{the amount of total power generation}] - [\text{the amount of self-consumed power}]$$

Therefore, to increase the amount of electric power to be sold, power saving which reduces the amount of self-consumed power is required.

The distribution board 3 has a configuration in which a contract breaker, an electrical leakage breaker, and branch breakers are connected in this order from the side of the reverse-power-flow watt-hour meter 2. The contract breaker automatically cuts off the power supply when an electric current greater than or equal to a contract with a power company flows. The electrical leakage breaker detects electrical leakage from interior wiring or in an electrical appliance and automatically cuts off the power supply. The branch breaker is attached to each of branch circuits that transmit electricity to each room from the distribution board 3. The branch breaker automatically cuts off the power supply when a short circuit occurs due to a failure of an electrical appliance or wiring and when an overcurrent flows.

A plurality of electric apparatuses $9_1$, $9_2$, $\cdots$, and $9_n$ (simply referred to as an electric apparatus 9 when the electric apparatuses need not be distinguished) are connected to the interior wiring from the branch breakers of the distribution board 3. Control controllers $10_1$ to $10_n$ (simply referred to as a controller 10 when the controllers need not be distinguished) are provided for the electric apparatuses 9 respectively. The controller 10 transmits a control signal to the electric apparatus 9 by, for example, wireless communication to control the operation of the electric apparatus 9.

As a wireless communication method, a network compliant with a wireless communication standard such as wireless LAN (Local Area Network), Bluetooth (registered trademark), and ZigBee can be used. The Bluetooth (registered trademark) is used for multimedia communication and can perform one-to-many communication. The ZigBee uses the physical layer of IEEE (Institute of Electrical and Electronics Engineers) 802.15.4. The IEEE 802.15.4 is a name of a short-range wireless communication network called PAN (Personal Area Network) or W (Wireless) PAN.

The controller 10 can remotely control an operational state such as power on/off of the electric apparatus 9. The controller 10 is connected to a communication unit 12 through a communication path 11. The communication path 11 is, for example, a home network. The communication unit 12 is connected to a control unit 13. The communication path 11 may be a wireless communication path.

The control unit 13 controls power limitation (power saving) according to the amount of sold electric power and the target value. The control unit 13 is specifically a home gateway (home server). The control unit 13 includes a CPU that performs various calculations and control processes, a storage unit (ROM (Read Only Memory), RAM (Random Access Memory), and the like) that stores databases and programs, an interface that performs input/output control of information between the control unit 13 and the outside, and a clock. An operation input of a user is supplied from an input unit 16 to the CPU and necessary information is supplied to a display unit 17 and displayed. The control unit 13 can remotely control an operation of a desired electric apparatus by communicating with the controller 10.

A GPS (Global Positioning System) 18, which is a position detection unit, is connected to the control unit 13. The control unit 13 can be connected to an external network, for example, the Internet 15 through a communication unit 14 and can acquire various information such as weather information from the Internet 15. The control unit 13 transmits the position information detected by the GPS 18 to a site that provides weather information through the Internet 15. Then, the site transmits weather information such as a weekly weather forecast (information of sunny, cloudy, and rainy, information of temperature and humidity, and the like) of a region indicated by the position information. The information of weather forecast acquired in this way is stored in a storage unit of the control unit 13.

A measurement value of the normal-power-flow watt-hour meter 1 and a measurement value of the reverse-power-flow watt-hour meter 2 are supplied to the control unit 13. The measurement data of the watt-hour meters are transmitted to the control unit 13 by, for example, wireless communication. The measurement data is used to control so that the amount of sold electric power reaches the target value and is also used for display of the display unit 17 connected to the control unit 13.

Further, the target value of the amount of sold electric power is supplied to the control unit 13 from a memory 19. The target value is set by a user's operation of the input unit 16. Further, the target value is adjusted to an appropriate value by adding seasonal factors and the like to the setting of the user. For example, the daylight hours are considered, and a low target value is set for a season of short daylight hours and a high target value is set for a season of long daylight hours. This adjustment is automatically performed by the control unit 13. The target value is set for each predetermined period. For example, the target value is set for each month.

In the control unit 13, the priority order of implementation of power limitation when the power limitation is implemented is determined in advance. The power limitation includes cut-off (OFF) of power supply and intermittent supply of power. Further, one aspect of the power limitation is a case in which although the power supply is ON, the operation mode of the electric apparatus is an energy saving mode. For example, regarding an air conditioner, it is possible to reduce the power consumption by lowering the set temperature during heating period, and it is possible to reduce the power consumption by raising the set temperature during cooling period. Further, in the case of a television receiver, it is possible to reduce the power consumption by lowering the brightness of the screen.

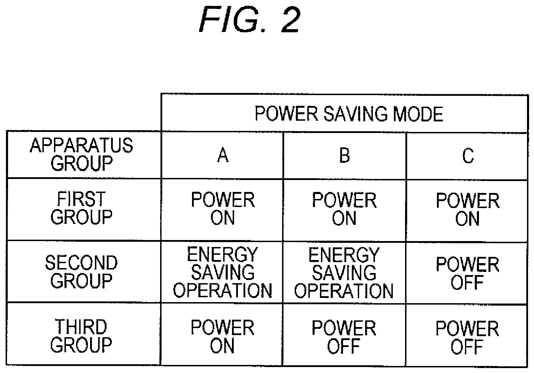

Fig. 2 illustrates an example of a power saving mode. The electric apparatuses in a home are divided into three groups. The electric apparatuses of a first group are security related apparatuses such as an electronic lock and telephones, whose power should not be turned off. The electric apparatuses of a second group are apparatuses whose power is to be saved and which can be operated in low power consumption (energy saving operation). The air conditioners and the television receivers are included in the second group. The electric apparatuses of a third group are apparatuses whose power is to be saved and which cannot be operated in low power consumption and can reduce power consumption by only power off. AV (audio-visual) apparatuses other than television receivers are included in the third group. Lighting apparatuses whose luminance can be adjusted are included in the second group and lighting apparatuses whose luminance cannot be adjusted are included in the third group.

As the power saving mode, any one of the three modes (A, B, and C) described below can be selected.

Power saving mode A: the first group (power on), the second group (energy saving operation), and the third group (power on): the rate of reduction of the amount of power consumption is low.

Power saving mode B: the first group (power on), the second group (energy saving operation), and the third group (power off): the rate of reduction of the amount of power consumption is intermediate.

Power saving mode C: the first group (power on), the second group (power off), and the third group (power off): the rate of reduction of the amount of power consumption is high.

A user divides the electric apparatuses 9 into the groups in advance. The control unit 13 can set any one of these power saving modes. In the first embodiment, any one of the power saving modes is set in advance. In other words, the user selects a power saving mode according to the target value of the amount of sold electric power.

The priority order described above is an example, and the electric apparatuses may be divided into a greater number of groups or the priority order may be set for each electric apparatus. The set priority order is stored in a memory in the control unit 13.

"Control of First Embodiment"

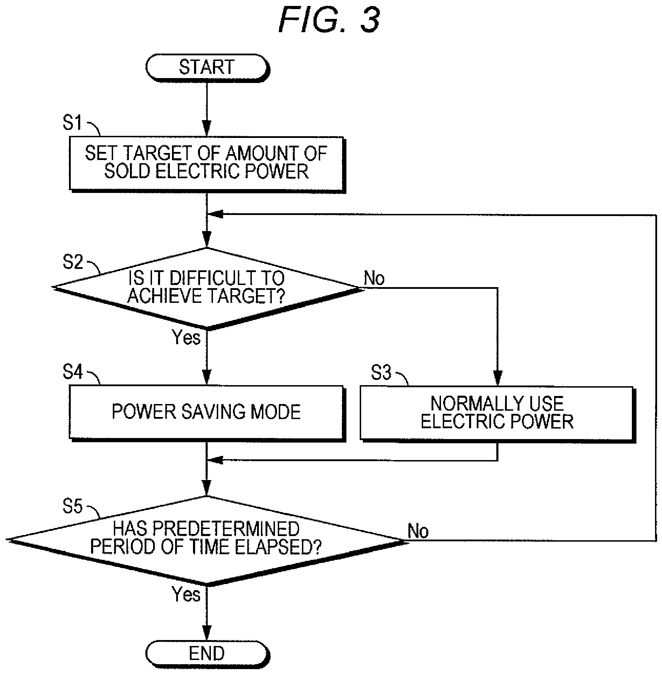

Control of the first embodiment performed by the control unit 13 will be described with reference to a flowchart in Fig. 3.

Step S1: the target value of the amount of sold electric power is set. For example, the target value of each month is automatically set or set by a user's operation. As described above, the target value is appropriately set by considering variation of daylight hours, the number of family members, and the like.

Step S2: the measurement data is supplied to the control unit 13 from the reverse-power-flow watt-hour meter 2. The control unit 13 integrates the data of the amount of sold electric power for each predetermined period of time. It is monitored whether or not the amount of sold electric power reaches the target value set in step S1 and it is determined whether or not the target is difficult to be achieved. For example, at a time point when about half a month has elapsed, if a target achievement rate (the integrated value of the amount of sold electric power up to the time point / the target value) does not reach 50%, it is determined that the target is difficult to be achieved. The determination is performed for each predetermined period of time, for example, for each hour. It may be determined whether or not the target is difficult to be achieved by using a progress rate in the third embodiment described later.

Step S3: if it is determined that the target is not difficult to be achieved as a result of the determination of step S2, the electric power is normally used. In other words, the power limitation is not implemented.

Step S4: if it is determined that the target is difficult to be achieved as a result of the determination of step S2, the power saving mode is started. The power is saved according to the power saving mode selected in advance from among the power saving modes A, B, and C described above.

Step S5: it is determined whether or not a predetermined period of time has elapsed. For example, it is determined whether or not one month has elapsed. If it is determined that the predetermined period of time has not elapsed, the process returns to step S2 (to determine whether or not the target is difficult to be achieved) . If it is determined that the predetermined period of time has elapsed, the control for one month is completed and the integrated value of the amount of sold electric power is reset. Then, the process of the next month is started.

In this way, the target value of the amount of sold electric power can be set by a user and a power limitation operation is automatically performed so that the amount of sold electric power reaches the target value. A plurality of power saving modes whose amounts of power consumption are different from each other are prepared, so that it is possible to select a power saving mode in association with setting of the target value. Therefore, the power limitation is implemented according to intention of the user, so that there is an advantage that the power limitation in which the intention of the user is reflected can be implemented.

<2. Second Embodiment>

"Control of Second Embodiment"

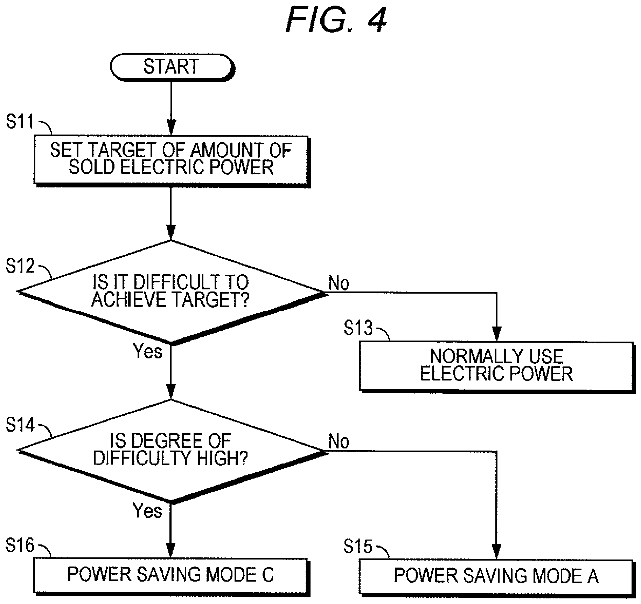

The configuration of the electric power management system of the second embodiment is the same as that of the first embodiment. The electric power management performed by the control unit 13 is different from that of the first embodiment. The control of the second embodiment performed by the control unit 13 will be described with reference to a flowchart in Fig. 4.

Step S11: the target value of the amount of sold electric power is set. For example, the target value of each month is automatically set or set by a user's operation. As described above, the target value is appropriately set by considering variation of daylight hours, the number of family members, and the like.

Step S12: the control unit 13 monitors whether or not the amount of sold electric power reaches the target value set in step S11 and it is determined whether or not the target is difficult to be achieved. For example, at a time point when about half a month has elapsed, if the target achievement rate does not reach 50%, it is determined that the target is difficult to be achieved. The determination is performed for each predetermined period of time, for example, for each hour.

Step S13: if it is determined that the target is not difficult to be achieved as a result of the determination of step S12, the electric power is normally used.

Step S14: if it is determined that the target is difficult to be achieved as a result of the determination of step S12, the degree of difficulty is determined. In other words, whether or not the degree of difficulty is high is determined. A power saving mode is selected according to a result of the determination of step S14.

Step S15: if it is determined that the degree of difficulty is not high as a result of the determination of step S14, the power saving mode A is selected. In other words, the power saving mode A in which the amount of reduced power consumption is the smallest among the power saving modes is selected.

Step S16: if it is determined that the degree of difficulty is high as a result of the determination of step S14, the power saving mode C is selected. In other words, the power saving mode C in which the amount of reduced power consumption is the largest among the power saving modes is selected.

Although omitted in the flowchart in Fig. 4, it is determined whether or not a predetermined period of time, for example, one month has elapsed in the same manner as in the process (step S5) of the first embodiment. If it is determined that the predetermined period of time has not elapsed, the process returns to step S12 (to determine whether or not the target is difficult to be achieved) . If it is determined that the predetermined period of time has elapsed, the control for one month is completed and the integrated value of the amount of sold electric power is reset. Then, the process of the next month is started.

In this way, in the second embodiment, in the same manner as in the first embodiment, the target value of the amount of sold electric power can be set by a user and a power limitation operation is automatically performed so that the amount of sold electric power reaches the target value. Further, the degree of difficulty to achieve the target is determined and a power saving mode of a different degree of reduction of the amount of power consumption is automatically selected. Therefore, in addition to an advantage that the power limitation in which the intention of the user is reflected can be implemented in the same manner as in the first embodiment, there is an advantage that it is possible to reduce inconvenience to the user as much as possible during the power limitation.

<3. Third Embodiment>

"Control of Third Embodiment"

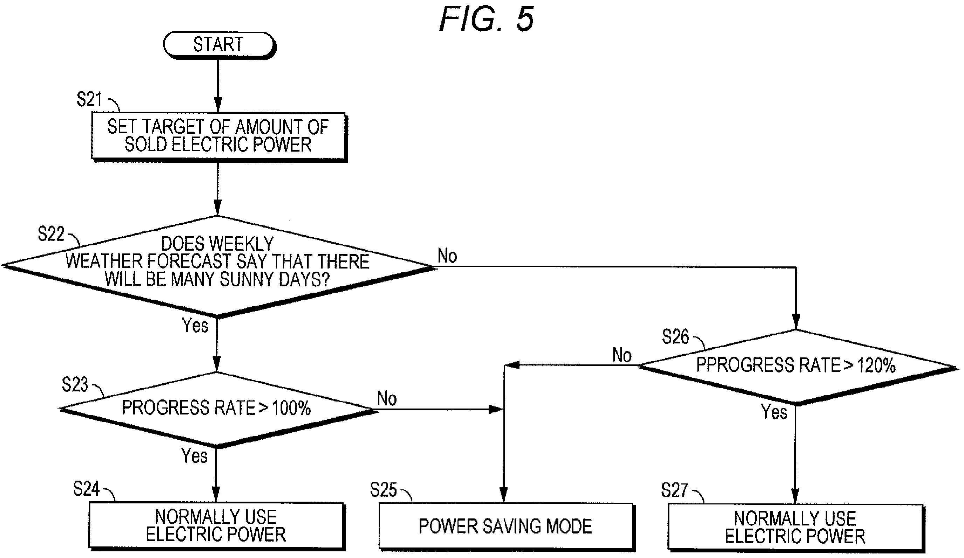

The configuration of the electric power management system of the third embodiment is the same as that of the first embodiment. The power management performed by the control unit 13 is different from that of the first embodiment. The control of the third embodiment performed by the control unit 13 will be described with reference to a flowchart in Fig. 5.

Step S21: the target value of the amount of sold electric power is set. For example, the target value of each month is automatically set or set by a user's operation. As described above, the target value is appropriately set by considering variation of daylight hours, the number of family members, and the like.

Step S22: it is determined whether or not there will be many sunny days based on a weekly weather forecast. The control unit 13 transmits position information to a predetermined site through the Internet 15 and acquires information of the weekly weather forecast from the predetermined site. It is possible to estimate a rate of sunny days from the weekly weather forecast. For example, when the rate of sunny days in a week is 50% or more, it is estimated that there will be many sunny days.

Step S23: if it is determined that there will be many sunny days in step S22, it is determined whether or not the progress rate of the amount of soled electric power with respect to the target value is greater than 100%. The progress rate is represented by the following formula:

```
(The integrated value of the amount of sold electric
power up to that time point / corrected target value)

(The corrected target value = the target value × (the
time elapsed up to that time point / a total time of a
predetermined period of time (for example, one month))
```

Step S24: if it is determined that the progress rate is greater than 100% in step S23, the electric power is normally used. In other words, the progress rate is greater than 100% and there will be many sunny days in the coming week, so that it is estimated that the risk that the amount of electric power generation of the photovoltaic power generation system decreases is small. Therefore, the power limitation is not implemented.

Step S25: if it is determined that the progress rate is smaller than or equal to 100% in step S23, the power limitation is implemented. As the power saving mode, a power saving mode selected in advance from among the power saving modes A, B, and C is used.

Step S26: if it is determined that there will be a small number of sunny days according to the weather forecast for this week in step S22, it is determined whether or not the progress rate is greater than 120%.

Step S27: if it is determined that the progress rate is greater than 120% in step S26, the electric power is normally used. In other words, the rate of sunny days in the coming week is small and there is a risk that the amount of electric power generation of the photovoltaic power generation system decreases, so that the value used for determining whether or not the amount of sold electric power reaches the target is set to higher. When the progress rate is greater than this value, the electric power is normally used.

On the other hand, if it is determined that the progress rate is smaller than or equal to 120% in the determination of step S26, the power limitation is implemented in step S25. As the power saving mode, a power saving mode selected in advance from among the power saving modes A, B, and C is used.

Although omitted in the flowchart in Fig. 5, it is determined whether or not a predetermined period of time, for example, one month has elapsed in the same manner as in the process (step S5) of the first embodiment. If it is determined that the predetermined period of time has not elapsed, the process returns to step S22 (to determine whether or not the weekly weather forecast says that there will be many sunny days) . If it is determined that the predetermined period of time has elapsed, the control for one month is completed and the integrated value of the amount of sold electric power is reset. Then, the process of the next month is started.

In this way, in the third embodiment, in the same manner as in the first embodiment, the target value of the amount of sold electric power can be set by a user and the power limitation operation is automatically performed so that the amount of sold electric power reaches the target value. Further, the amount of sold electric power in the coming week is estimated by referring to the information of weekly weather forecast. Therefore, in addition to an advantage that the power limitation in which the intention of the user is reflected can be implemented in the same manner as in the first embodiment, there is an advantage of improving the prediction accuracy of the amount of sold electric power.

<4. Modified Example>

While the embodiments of the present disclosure have been specifically described, the present disclosure is not limited to the embodiments described above, but various modifications can be made based on the technical ideas of the present disclosure. For example, the configurations, methods, processes, shapes, materials, numerical values, and so on in the above-described embodiments are merely exemplary, and configurations, methods, processes, shapes, materials, numerical values, and so on that are different from those may also be used, as appropriate.

For example, in the present disclosure, the units of the amount of sold electric power are not limited to the amount of electric power, but the amount of money of sold electric power may be used. Further, the control may be performed so that the amount of saved electric power (the amount of reduced $CO_2$) is the target value. Further, a battery may be provided. When a power failure occurs, electric power is supplied to electric apparatuses from the battery. When the remaining capacity of the battery is small, the amount of electric power generated by the photovoltaic power generation system may be used to charge the battery.

REFERENCE SIGNS LIST

| | |
|---|---|
| 1 | Normal-power-flow watt-hour meter |
| 2 | Reverse-power-flow watt-hour meter |
| 3 | Distribution board |
| 5 | Photovoltaic cell |
| 7 | Total power generation watt-hour meter |
| 9, $9_1$ - $9_n$ | Electric apparatus |
| 10, $10_1$ - $10_n$ | Controller |
| 13 | Control unit |

**Claims**

1. An energy management device for actively performing power saving, which is being configured to:

sell surplus power generated by a power generator (5); **characterized in that** the energy management device being configured to:
set a target value (19) of an amount of electric power sold in a predetermined period of time;
integrate measurement data, supplied from a reverse-power-flow watt-hour meter (2), of the amount of sold electric power for each predetermined period of time,
estimate whether or not the integrated amount of sold electric power reaches the target value (19); and

implement power limitation, when it is estimated that the amount of sold electric power does not reach the target value (19), wherein the power limitation is implemented according to a priority order set for a plurality of electric apparatuses.

2. The energy management device according to claim 1, further configured to:
   set the target value (19) according to seasonal factors.

3. The energy management device according to claim 1, further configured to:
   use weather forecast information, when estimating whether or not the amount of sold electric power reaches the target value (19).

4. The energy management device according to claim 3,
   wherein the power generator is a photovoltaic power generator (5), and
   the weather forecast information is information related to a degree of sunshine.

5. The energy management device according to claim 1, further configured to:

   when estimating whether or not the amount of sold electric power reaches the target value, estimate a degree of difficulty to reach the target value, and
   change a degree of power limitation according to the degree of difficulty to reach the target value.

6. The energy management device according to claim 1, wherein the power limitation is a combination of power-off of an electric apparatus (9) and an energy saving operation of an electric apparatus (9).

7. The energy management device according to claim 1, wherein when it is estimated that the amount of sold electric power relatively easily reaches the target value (19), an electrical storage device is charged with power generated by the power generator (5).

8. An energy management method for actively performing power saving, comprising:

   selling surplus power generated by a power generator; **characterized by**
   setting a target value (19) of an amount of electric power sold in a predetermined period of time;
   integrating measurement data, supplied from a reverse-power-flow watt-hour meter (2), of the amount of sold electric power for each predetermined period of time,
   estimating whether or not the integrated amount of sold electric power reaches the target value (19); and
   implementing power limitation, when it is estimated that the amount of sold electric power does not reach the target value (19), wherein the power limitation is implemented according to a priority order set for a plurality of electric apparatuses.

9. A program for causing a computer to perform an energy management method according to claim 8.


**Patentansprüche**

1. Energieverwaltungseinrichtung zum aktiven Vornehmen von Leistungseinsparungen, die konfiguriert ist, um:

   durch einen Leistungsgenerator (5) erzeugte Überschussleistung zu veräußern,
   **dadurch gekennzeichnet, dass** die Energieverwaltungseinrichtung konfiguriert ist, um:

   einen Sollwert (19) einer in einer vorab bestimmten Zeitspanne veräußerten Menge an elektrischer Leistung einzustellen,
   durch einen Leistungsrückfluss-Wattstundenzähler (2) gelieferte Messdaten der Menge an veräußerter elektrischer Leistung für jede vorab bestimmte Zeitspanne zu integrieren,
   zu schätzen, ob die integrierte Menge an veräußerter elektrischer Leistung den Sollwert (19) erreicht, und
   eine Leistungsbegrenzung umzusetzen, wenn geschätzt wird, dass die Menge an veräußerter elektrischer Leistung den Sollwert (19) nicht erreicht, wobei die Leistungsbegrenzung gemäß einer für eine Vielzahl elektrischer Vorrichtungen eingestellten Prioritätsrangfolge umgesetzt wird.

**2.** Energieverwaltungseinrichtung nach Anspruch 1,
die ferner konfiguriert ist, um:
den Sollwert (19) gemäß jahreszeitlich bedingten Faktoren einzustellen.

**3.** Energieverwaltungseinrichtung nach Anspruch 1,
die ferner konfiguriert ist, um:
bei der Schätzung, ob die Menge an veräußerter elektrischer Leistung den Sollwert (19) erreicht, Wettervorhersageinformationen zu verwenden.

**4.** Energieverwaltungseinrichtung nach Anspruch 3, wobei es sich bei dem Leistungsgenerator um einen Solargenerator (5) handelt, und
es sich bei den Wettervorhersageinformationen um ein Ausmaß an Sonnenschein betreffende Informationen handelt.

**5.** Energieverwaltungseinrichtung nach Anspruch 1,
die ferner konfiguriert ist, um:

beim Schätzen, ob die Menge an veräußerter elektrischer Leistung den Sollwert erreicht, einen Schwierigkeitsgrad für ein Erreichen des Sollwerts zu schätzen und
gemäß dem Schwierigkeitsgrad für ein Erreichen des Sollwerts einen Leistungsbegrenzungsgrad zu ändern.

**6.** Energieverwaltungseinrichtung nach Anspruch 1,
wobei es sich bei der Leistungsbegrenzung um eine Kombination aus Abschaltung einer elektrischen Vorrichtung (9) und einem Energiesparbetrieb einer elektrischen Vorrichtung (9) handelt.

**7.** Energieverwaltungseinrichtung nach Anspruch 1,
wobei eine elektrische Speichereinrichtung mit durch den Leistungsgenerator (5) erzeugter Leistung aufgeladen wird, wenn geschätzt wird, dass die Menge an veräußerter elektrischer Leistung den Sollwert (19) relativ leicht erreicht.

**8.** Energieverwaltungsverfahren zum aktiven Vornehmen von Leistungseinsparungen, umfassend:

Veräußern von durch einen Leistungsgenerator erzeugter Überschussleistung,
**gekennzeichnet durch**
Einstellen eines Sollwerts (19) einer in einer vorab bestimmten Zeitspanne veräußerten Menge an elektrischer Leistung,
Integrieren von durch einen Leistungsrückfluss-Wattstundenzähler (2) gelieferten Messdaten der Menge an veräußerter elektrischer Leistung für jede vorab bestimmte Zeitspanne,
Schätzen, ob die integrierte Menge an veräußerter elektrischer Leistung den Sollwert (19) erreicht, und
Umsetzen einer Leistungsbegrenzung, wenn geschätzt wird, dass die Menge an veräußerter elektrischer Leistung den Sollwert (19) nicht erreicht, wobei die Leistungsbegrenzung gemäß einer für eine Vielzahl elektrischer Vorrichtungen eingestellten Prioritätsrangfolge umgesetzt wird.

**9.** Programm zum Verursachen, dass ein Computer ein Energieverwaltungsverfahren nach Anspruch 8 durchführt.

**Revendications**

**1.** Dispositif de gestion d'énergie pour réaliser activement une économie d'énergie, configuré pour :

vendre un excédent d'énergie généré par un générateur d'énergie (5) ;
le dispositif de gestion d'énergie étant **caractérisé en ce qu'**il est configuré pour :

fixer une valeur cible (19) d'une quantité d'énergie électrique vendue au cours d'une période de temps prédéterminée ;
intégrer des données de mesure, fournies par un watt-heuremètre à inversion de flux d'énergie (2), de la quantité d'énergie électrique vendue pour chaque période de temps prédéterminée,
estimer si la quantité intégrée d'énergie électrique vendue atteint ou non la valeur cible (19) ; et
appliquer une limitation d'énergie lorsqu'il est estimé que la quantité d'énergie électrique vendue n'atteint pas la valeur cible (19), la limitation d'énergie étant appliquée selon un ordre de priorité fixé pour une pluralité d'appareils électriques.

2. Dispositif de gestion d'énergie selon la revendication 1, configuré en outre pour :
fixer la valeur cible (19) selon des facteurs saisonniers.

3. Dispositif de gestion d'énergie selon la revendication 1, configuré en outre pour :
utiliser des informations de prévisions météorologiques lorsqu'il estime si la quantité d'énergie électrique vendue atteint ou non la valeur cible (19).

4. Dispositif de gestion d'énergie selon la revendication 3,
dans lequel le générateur d'énergie est un générateur d'énergie photovoltaïque (5), et
les informations de prévisions météorologiques sont des informations relatives à un niveau d'ensoleillement.

5. Dispositif de gestion d'énergie selon la revendication 1, configuré en outre pour :

lorsqu'il estime si la quantité d'énergie électrique vendue atteint ou non la valeur cible, estimer un niveau de difficulté à atteindre la valeur cible, et
modifier un niveau de limitation d'énergie selon le niveau de difficulté à atteindre la valeur cible.

6. Dispositif de gestion d'énergie selon la revendication 1, dans lequel la limitation d'énergie est une combinaison d'une mise hors tension d'un appareil électrique (9) et d'un fonctionnement économe en énergie d'un appareil électrique (9).

7. Dispositif de gestion d'énergie selon la revendication 1, dans lequel, lorsqu'il est estimé que la quantité d'énergie électrique vendue atteint relativement facilement la valeur cible (19), un dispositif de stockage électrique est chargé par de l'énergie générée par le générateur d'énergie (5).

8. Procédé de gestion d'énergie pour réaliser activement une économie d'énergie, comprenant :

la vente d'un excédent d'énergie généré par un générateur d'énergie ;
**caractérisé par**
la fixation d'une valeur cible (19) d'une quantité d'énergie électrique vendue au cours d'une période de temps prédéterminée ;
l'intégration de données de mesure, fournies par un watt-heuremètre à inversion de flux d'énergie (2), de la quantité d'énergie électrique vendue pour chaque période de temps prédéterminée,
l'estimation si la quantité intégrée d'énergie électrique vendue atteint ou non la valeur cible (19) ; et
l'application d'une limitation d'énergie lorsqu'il est estimé que la quantité d'énergie électrique vendue n'atteint pas la valeur cible (19), la limitation d'énergie étant appliquée selon un ordre de priorité fixé pour une pluralité d'appareils électriques.

9. Programme pour amener un ordinateur à mettre en oeuvre un procédé de gestion d'énergie selon la revendication 8.

# FIG. 1

EP 2 849 302 B1

# FIG. 2

| APPARATUS GROUP | POWER SAVING MODE | | |
|---|---|---|---|
| | A | B | C |
| FIRST GROUP | POWER ON | POWER ON | POWER ON |
| SECOND GROUP | ENERGY SAVING OPERATION | ENERGY SAVING OPERATION | POWER OFF |
| THIRD GROUP | POWER ON | POWER OFF | POWER OFF |

# FIG. 3

```
                    ( START )
                        │
                        ▼
S1 ┌──────────────────────────────────┐
   │   SET TARGET OF AMOUNT OF         │
   │   SOLD ELECTRIC POWER             │
   └──────────────────────────────────┘
                        │
                        ▼
S2          ╱ IS IT DIFFICULT TO ╲        No
            ╲ ACHIEVE TARGET?     ╱────────────┐
                        │                       │
                       Yes                      │
                        │                       │
S4 ┌──────────────────────┐    S3 ┌──────────────────────┐
   │  POWER SAVING MODE    │       │  NORMALLY USE        │
   │                       │       │  ELECTRIC POWER      │
   └──────────────────────┘       └──────────────────────┘
                        │                       │
                        ◄───────────────────────┘
                        ▼
S5          ╱ HAS PREDETERMINED  ╲      No
            ╲ PERIOD OF TIME ELAPSED? ╱──────────┐
                        │
                       Yes
                        │
                        ▼
                    ( END )
```

14

# FIG. 4

START

S11 — SET TARGET OF AMOUNT OF SOLD ELECTRIC POWER

S12 — IS IT DIFFICULT TO ACHIEVE TARGET?  —No→  S13 — NORMALLY USE ELECTRIC POWER

Yes

S14 — IS DEGREE OF DIFFICULTY HIGH?  —No→  S15 — POWER SAVING MODE A

Yes

S16 — POWER SAVING MODE C

## FIG. 5

START

S21 — SET TARGET OF AMOUNT OF SOLD ELECTRIC POWER

S22 — DOES WEEKLY WEATHER FORECAST SAY THAT THERE WILL BE MANY SUNNY DAYS? — No

Yes

S23 — PROGRESS RATE > 100% — No

Yes

S26 — PPROGRESS RATE > 120% — No

Yes

S24 — NORMALLY USE ELECTRIC POWER

S25 — POWER SAVING MODE

S27 — NORMALLY USE ELECTRIC POWER

EP 2 849 302 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003092844 A
- JP 2004328960 A
- JP 2012005168 A
- JP 2011172334 A
- WO 2012057119 A1
- WO 2005040992 A2